# EUROPEAN PATENT APPLICATION

(11) **EP 4 358 191 A1**
(43) Date of publication of application: **24.04.2024**
(21) Application number: 22918336.3
(22) Date of filing: 08.12.2022
(51) Int. Cl.: H01M 4/62

(54) **NEGATIVE ELECTRODE SLURRY AND PREPARATION METHOD THEREFOR, NEGATIVE ELECTRODE PLATE, AND SECONDARY BATTERY**

(30) Priority: 04.01.2022 CN 202210007260
(71) Applicant: Contemporary Amperex Technology Co., Limited, Ningde, Fujian 352100 (CN)
(72) Inventor: MU, Sainan, Ningde, Fujian 352100 (CN); WANG, Ning, Ningde, Fujian 352100 (CN); WANG, Xinghui, Ningde, Fujian 352100 (CN); LI, Shisong, Ningde, Fujian 352100 (CN); ZHANG, Shengwu, Ningde, Fujian 352100 (CN); WEI, Zhiting, Ningde, Fujian 352100 (CN)
(74) Representative: Kraus & Lederer PartGmbB
(86) International application number: PCT/CN2022/137541
(87) International publication number: WO 2023/130886

(57) **Abstract**

The present application provides a negative electrode slurry, and a method for preparing the same, as well as a negative electrode plate, a secondary battery, a battery module, a battery pack, and an electrical apparatus thereof, where the negative electrode slurry comprises a negative electrode binder, and the negative electrode binder comprises a polymer composed of a building block represented by formula (I). The negative electrode binder in the present application is used to effectively improve the problem of roller sticking of the negative electrode plate during cold pressing, and the negative electrode binder and the negative electrode active material are better cladded, thereby reducing solid electrolyte interface reconstruction during cycles, and improving cycling performance and storage performance of the secondary battery.

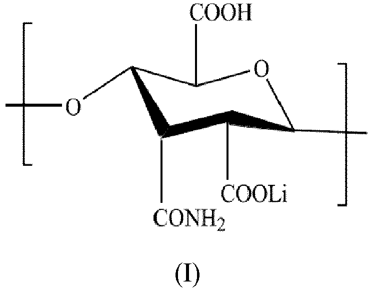

## Description

The present application claims the priority to 202210007260.6 filed on 4 January 2022.

### Technical Field

The present application relates to the technical field of lithium batteries, and particularly relates to a negative electrode slurry, and a method for preparing the same, as well as a negative electrode plate, a secondary battery, a battery module, a battery pack, and an electrical apparatus thereof.

### Background

In recent years, as secondary batteries are increasingly widely applied in energy storage power systems, such as water power, thermal power, wind power and solar power stations, as well as power tools, electric bicycles, electric motorcycles, electric vehicles, military equipment, aerospace and other fields. Due to the great development of the secondary batteries, higher requirements are put forward for energy density, cycling performance, and storage performance thereof.

In existing technologies, in order to improve the energy density of the secondary batteries, use amounts of non-active materials in the negative electrode film layer are reduced, for example, a use amount of the negative electrode binder is gradually reduced. The use amount of the negative electrode binder is reduced, to reduce a bonding strength between negative electrode active materials, and deteriorate structural stability of the negative electrode plate, thereby resulting in processing problems of the negative electrode plate, such as roller sticking of the negative electrode plate during cold pressing, which in turn affects the cycling performance and storage performance of the secondary batteries. Therefore, how to improve roller sticking of the negative electrode plate during cold pressing and then improve the cycling performance and storage performance of the secondary battery has become an important issue in urgent need of research during wide application of the secondary batteries.

### Summary of the Invention

In view of the above problems, an object of the present application is to improve roller sticking of a negative electrode plate during cold pressing, and then improve cycling performance and storage performance of a secondary battery.

In order to achieve the above object, the present application provides a negative electrode slurry, a method for preparing the same, as well as a negative electrode plate, a secondary battery, a battery module, a battery pack, and an electrical apparatus thereof.

A first aspect of the present application provides a negative electrode slurry, comprising a negative electrode binder, the negative electrode binder comprising a polymer composed of a building block represented by formula (I):

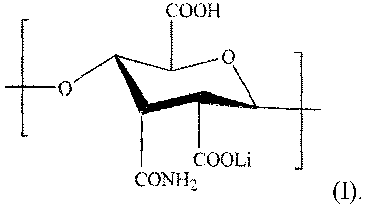

Therefore, in the present application, the polymer composed of the building block represented by formula (I) is used as the negative electrode binder, thereby better improving a problem of roller sticking of a negative electrode plate during cold pressing, and improving cycling performance and storage performance of a secondary battery. In addition, during use of the negative electrode binder, the operation is simple, safe, and environmentally friendly, reduces the harm to the environment and personnel, and is more suitable for large-scale application in the industry.

In any of embodiments, a number average molecular weight of the negative electrode binder is from 40 W to 120 W, and is preferably from 70 W to 90 W. The number average molecular weight of the negative electrode binder is regulated to be within the above range, so that a polar group on a linear high molecular polymer chain of the negative electrode binder can form "line contact" binding to a surface of a negative electrode active material, thereby improving long-range bonding strength of the negative electrode plate, improving cohesion of the negative electrode plate, stabilizing a structure of the negative electrode plate, effectively improving the problem of roller sticking of the negative electrode plate during cold pressing, and then improving the cycling performance and storage performance of the secondary battery.

In any of embodiments, a percentage mass content of the negative electrode binder is from 1% to 3.5%, and is preferably from 2% to 3%, based on a total mass of the negative electrode slurry. The percentage mass content of the negative electrode binder is regulated to be within the above range, thereby improving conductivity of the negative electrode plate, while improving roller sticking of the negative electrode plate during cold pressing, and contributing more to improving the cycling performance and storage performance of the secondary battery.

In any of embodiments, the negative electrode slurry comprises a negative electrode active material, a conductive agent, a dispersant, and the negative electrode binder, and a mass ratio of the negative electrode active material, the conductive agent, the dispersant, and the negative electrode binder is (93.0-97.0):(1.0-2.0):(1.0-1.5):(1.0-3.5), based on the total mass of the negative electrode slurry. When the mass ratio of the negative electrode active material, the conductive agent, the dispersant, and the binder in the negative electrode slurry is regulated to be within the above range, it is easier to uniformly coat the negative electrode slurry on a negative electrode current collector, and the formed negative electrode plate has better conductivity, thereby contributing more to improving roller sticking of the negative electrode plate during cold pressing, and contributing more to improving the cycling performance and storage performance of the secondary battery.

In any of embodiments, the negative electrode active material comprises at least one of graphite, soft carbon, hard carbon, carbon fiber, mesocarbon microbead, silicon-based material, tin-based material, and lithium titanate; and optionally, the graphite includes at least one of artificial graphite and natural graphite; or the silicon-based material includes at least one of elemental silicon, silicon-oxygen compound, silicon-carbon composite, and silicon alloy; or the tin-based material includes at least one of elemental tin, tin-oxygen compound, or tin alloy. When the above negative electrode active material is used, it is more conductive to improving the phenomenon of roller sticking of the negative electrode plate during cold pressing, and is therefore more conductive to improving the cycling performance and storage performance of the secondary battery.

In any of embodiments, a viscosity of the negative electrode slurry is from 4,000 mPa·s to 12,000 mPa·s. When the viscosity of the negative electrode slurry is regulated to be within the above range, it is more conductive to forming a uniform film layer, improving the problem of roller sticking of the negative electrode plate during cold pressing, and is more conductive to improving the cycling performance and storage performance of the secondary battery.

A second aspect of the present application provides a method for preparing a negative electrode slurry, including steps of:
sufficiently mixing a negative electrode active material, a conductive agent, and a first part of a dispersant to obtain a uniform powder;
adding deionized water into the uniform powder, and stirring the mixture to obtain a first uniform slurry;
adding a second part of the dispersant and deionized water into the first uniform slurry, and stirring the mixture to obtain a second uniform slurry; and
adding a negative electrode binder into the second uniform slurry, stirring the mixture, regulating a viscosity of the mixture, and vacuum degassing to obtain the negative electrode slurry;
where the first part of the dispersant accounts for from 20% to 50% of a total mass of the dispersant, and the second part of the dispersant accounts for from 50% to 80% of the dispersant, where the negative electrode binder comprises a polymer composed of a building block represented by formula (I):

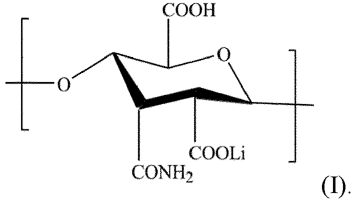

In addition, the above preparation method is characterized by simple operations, and easily available, safe and environmentally friendly raw materials, thereby reducing the harm to the environment and personnel, and is more suitable for large-scale application in the industry. Further, the negative electrode binder is used in the preparation method, which is more conductive to improving the problem of roller sticking of the negative electrode plate during cold pressing, and is more conductive to improving the cycling performance and storage performance of the secondary battery.

A third aspect of the present application provides a negative electrode plate, comprising a negative electrode current collector and a negative electrode film layer provided on at least one surface of the negative electrode current collector, where the negative electrode film layer comprises the negative electrode slurry in the first aspect of the present application or is prepared using the preparation method in the second aspect of the present application, and a coating weight of the negative electrode film layer is from 130 mg/1,540.25 mm² to 190 mg/1,540.25 mm². The above negative electrode film layer prepared from the negative electrode slurry in the first aspect of the present application or prepared using the preparation method in the second aspect of the present application is more conductive to improving the problem of roller sticking of the negative electrode plate during cold pressing, and is more conductive to improving the cycling performance and storage performance of the secondary battery.

In any of embodiments, a compacted density of the negative electrode film layer is from 1.50 g/cm³ to 1.60 g/cm³. When the compacted density of the negative electrode film layer is regulated to be within the above range, it is more conductive to improving the cycling performance and storage performance of the secondary battery.

A fourth aspect of the present application provides a secondary battery, comprising the negative electrode plate in the third aspect of the present application.

A fifth aspect of the present application provides a battery module, comprising the secondary battery in the fourth aspect of the present application.

A sixth aspect of the present application provides a battery pack, comprising the battery module in the fifth aspect of the present application.

A seventh aspect of the present application provides an electrical apparatus, comprising at least one of the secondary battery in the fourth aspect of the present application, the battery module in the fifth aspect of the present application, or the battery pack in the sixth aspect of the present application.

The beneficial effects of the present application include:
The present application provides a negative electrode slurry, a method for preparing the same, as well as a negative electrode plate, a secondary battery, a battery module, a battery pack, and an electrical apparatus thereof, where the negative electrode slurry comprises a negative electrode binder, and the negative electrode binder comprises a polymer composed of a building block represented by formula (I). The negative electrode binder in the present application is used to effectively improve the problem of roller sticking of the negative electrode plate during cold pressing, and the negative electrode binder and the negative electrode active material are better cladded, thereby reducing solid electrolyte interface reconstruction during cycles, and improving the cycling performance and storage performance of the secondary battery.

### Description of Drawings

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4; and
Fig. 6 is a schematic diagram of an electrical apparatus in which a secondary battery is used as a power source according to an embodiment of the present application.

### Description of reference numerals:

1 battery pack; 2 upper box body; 3 lower box body; 4 battery module; 5 secondary battery; 51 case; 52 electrode assembly; 53 cover plate.

### Detailed Description

Hereinafter, embodiments of a negative electrode slurry, a method for preparing the same, as well as a negative electrode plate, a secondary battery, a battery module, a battery pack, and an electrical apparatus thereof in the present application are specifically disclosed by referring to the detailed description of the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower and upper limits define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between "0-5" have been listed herein, and "0-5" is just an abbreviated representation of the combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specifically stated, all embodiments and optional/preferable embodiments of the present application may be combined with each other to form new technical solutions.

Unless otherwise specifically stated, all technical features and optional/preferable technical features of the present application may be combined with each other to form new technical solutions.

Unless otherwise specifically stated, all steps in the present application may be performed sequentially or may be performed randomly, and are preferably performed sequentially. For example, the method includes steps (a) and (b), which means that the method may include steps (a) and (b) performed sequentially, or may include steps (b) and (a) performed sequentially. For example, the reference to the method may further comprise step (c), which means that step (c) may be added to the method in any order, for example, the method may comprise steps (a), (b) and (c), or may comprise steps (a), (c) and (b), or may comprise steps (c), (a) and (b), and so on.

Unless otherwise specifically stated, the terms "include/including" and "comprise/comprising" mentioned in the present application may be open-ended, or may be closed-ended. For example, the "including" and "comprising" may mean that other components that are not listed are further included or comprised, or only the listed components are included or comprised.

Unless otherwise specifically stated, the term "or" is inclusive in the present application. By way of example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the specification of the present application, for the sake of concise description, the term "negative electrode binder" refers to a "polymer A composed of a building block represented by formula (I)".

### [Negative electrode slurry]

As a non-active material in a secondary battery, a negative electrode binder mainly serves to bind negative electrode powder materials (such as a negative electrode active material, a conductive agent, and a dispersant), so that the negative electrode active material, the conductive agent, and a current collector bind to each other. However, as energy density of the secondary battery increases, a use amount of the negative electrode binder as the non-active material gradually decreases, bonding strength of the negative electrode plate decreases, and structural stability of the negative electrode plate deteriorates, thereby resulting in a problem of serious roller sticking of the negative electrode plate during cold pressing, and having a great impact on cycling performance and storage performance of the secondary battery.

At present, in order to solve the problem of roller sticking during cold pressing in a preparation process of the negative electrode plate, emulsion particle type SBR latex or modified styrene butadiene rubber is often used as the binder, but the above types of binders function by "point contact" binding between the negative electrode powder materials, rather than "line contact" binding, so that the negative electrode plate lacks long-range binding power as a whole, thereby failing to solve the problem of roller sticking of the negative electrode plate in the cold pressing process. In order to solve the problem of roller sticking during cold pressing in the preparation process of the negative electrode plate, an oily agent is added into the negative electrode slurry or a release agent is used to coat the roller. However, both the oily agent and the release agent are toxic, tend to cause hazards such as environmental pollution and personnel poisoning, and will further affect the storage performance of the secondary battery. Therefore, finding a negative electrode binder that enables "line contact" binding between the negative electrode powder materials and is harmless to the environment and personnel has become a key research direction for the applicant. Based on this, the present application provides a negative electrode slurry, a method for preparing the same, as well as a negative electrode plate, a secondary battery, a battery module, a battery pack, and an electrical apparatus thereof.

In an embodiment of the present application, the present application presents a negative electrode slurry, comprising a negative electrode binder, the negative electrode binder comprising a polymer A composed of a building block represented by formula (I):

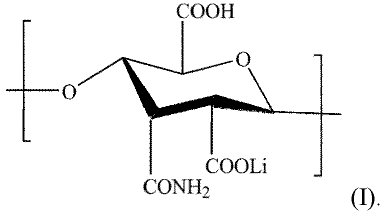

Although the mechanism is not clear yet, the applicant unexpectedly finds that: when the polymer A composed of the building block represented by formula (I) in the present application is used as the negative electrode binder, a side chain group of the negative electrode binder comprises strongly polar acylamino (-CO-NH₂), lithium carboxylate (-COOLi), or carboxyl (-COOH), which forms an intermolecular force (Van der Waals force or hydrogen bond) or a chemical bond with groups on a surface of the negative electrode active material (for example, a large number of epoxy groups, carbonyl groups and hydroxyl groups), and then forms "line contact" binding with the negative electrode powder materials. This "line contact" binding, on the one hand, can increase long-range bonding strength between the negative electrode active materials, improve cohesion of the negative electrode plate, improve the problem of roller sticking of the negative electrode plate in the cold pressing process, and then reduce loss of the negative electrode active material in the preparation process of the negative electrode plate; and on the other hand, provides the negative electrode active material with a cladding layer comprising the negative electrode binder, and can reduce loss of SEI film (solid electrolyte interphase) during cycles of the secondary battery, thereby reducing an active lithium content in an electrolyte solution caused by SEI film reconstruction. Due to the effects in the above two aspects, the cycling performance and storage performance of the secondary battery are significantly improved. In addition, the use process of the negative electrode binder is a simple process, is safe and environmentally friendly, reduces the harm to the environment and personnel, and is more suitable for large-scale application in the industry.

In some embodiments, a number average molecular weight of the negative electrode binder is from 40 W to 120 W, and is preferably from 70 W to 90 W. When the number average molecular weight of the negative electrode binder is less than 40 W, the number of effective groups (such as acylamino (-CO-NH₂), lithium carboxylate (-COOLi), and carboxyl (-COOH)) thereon is limited, thereby failing to effectively binding the negative electrode active material, the conductive agent, and a negative electrode current collector; and when the number average molecular weight of the negative electrode binder is greater than 120 W, the negative electrode binder cannot be completely dissolved in a deionized water solvent system, and has decreased dispersibility in the negative electrode plate, thereby reducing the binding effect. The number average molecular weight of the negative electrode binder is regulated to be within the above range, a polar group on a linear high molecular polymer chain of the negative electrode binder can form "line contact" binding to a surface of a negative electrode active material, and can improve long-range bonding strength of the negative electrode plate, thereby improving cohesion of the negative electrode plate, stabilizing a structure of the negative electrode plate, effectively improving the problem of roller sticking of the negative electrode plate in the cold pressing process, and then improving the cycling performance and storage performance of the secondary battery. Further, the negative electrode plate also has suitable resistance.

In some embodiments, a percentage mass content of the negative electrode binder is from 1% to 3.5%, and is preferably from 2% to 3%, based on a total mass of the negative electrode slurry. When the percentage mass content of the negative electrode binder in the negative electrode slurry is less than 1%, no conductive network is formed between particles of the conductive agent and the negative electrode active material, thereby increasing electron transmission paths with slow electron transmission, and increasing internal resistance of the negative electrode plate. As the percentage mass content of the negative electrode binder gradually increases, a conductive network between the particles of the conductive agent and the negative electrode active material is gradually established perfectly, and the conductivity gradually increases. However, when the percentage mass content of the negative electrode binder in the negative electrode slurry is more than 3.5%, a content of free negative electrode binder increases, and the excess negative electrode binder moves freely, thereby affecting infiltration of the electrolyte solution in the negative electrode film layer, and affecting the cycling performance and storage performance of the secondary battery. Further, the negative electrode binder itself has no conductivity, and the internal resistance of the negative electrode plate will increase. The percentage mass content of the negative electrode binder is regulated to be within the above range, thereby improving conductivity of the negative electrode plate, while improving roller sticking of the negative electrode plate during cold pressing, and contributing more to improving the cycling performance and storage performance of the secondary battery.

In some embodiments, the negative electrode slurry comprises a negative electrode active material, a conductive agent, a dispersant, and the negative electrode binder, and a mass ratio of the negative electrode active material, the conductive agent, the dispersant, and the negative electrode binder is (93.0-97):(1.0-2.0):(1.0-1.5):(1.0-3.5), based on the total mass of the negative electrode slurry. It is understandable that the total mass of the negative electrode slurry is a sum of a mass of the negative electrode active material, a mass of the conductive agent, a mass of the dispersant, and a mass of the negative electrode binder. When the mass ratio of the negative electrode active material, the conductive agent, the dispersant, and the binder in the negative electrode slurry is regulated to be within the above range, it is easier to uniformly coat the negative electrode slurry on the negative electrode current collector, and the formed negative electrode plate has better conductivity, thereby contributing more to improving roller sticking of the negative electrode plate in the cold pressing process, and contributing more to improving the cycling performance and storage performance of the secondary battery.

In some embodiments, the negative electrode active material comprises at least one of graphite, soft carbon, hard carbon, carbon fiber, mesocarbon microbead, silicon-based material, tin-based material, and lithium titanate; and optionally, the graphite includes at least one of artificial graphite and natural graphite; or the silicon-based material includes at least one of elemental silicon, silicon-oxygen compound, silicon-carbon composite, and silicon alloy; or the tin-based material includes at least one of elemental tin, tin-oxygen compound, or tin alloy.

When the above negative electrode active material is used, it is more conductive to improving the phenomenon of roller sticking of the negative electrode plate during cold pressing, and is therefore more conductive to improving the cycling performance and storage performance of the secondary battery. Preferably, the negative electrode active material comprises graphite, where the graphite includes at least one of artificial graphite and natural graphite. There is not only a carbon-carbon bond, but also a large number of epoxy groups, carbonyl groups, and hydroxyl groups on surfaces of graphite particles. The groups can form an intermolecular force or a chemical bond with strongly polar side chain groups such as -CO-NH₂, -COOLi, and -COOH of the negative electrode binder, and then form the "line contact" binding to the negative electrode powder materials. This "line contact" not only increases the long-range bonding strength of the negative electrode plate, improves the cohesion of the negative electrode plate, stabilizes the structure of the negative electrode plate, improves the problem of roller sticking of the negative electrode plate during cold pressing, and achieves better cladding of the surface of the negative electrode active material, but also can reduce the SEI film reconstruction during cycles of the secondary battery, thereby improving the cycling performance and storage performance of the secondary battery.

A particle size of the negative electrode active material is not particularly limited in the present application, as long as the objective of the present application can be achieved. Preferably, in some embodiments, particle size distribution of the negative electrode active material is that: Dv10 is from 6.5 µm to 11.5 µm, Dv50 is from 13.5 µm to 11.5 µm, and Dv90 is from 25.0 µm to 50.0 µm. When the particle size distribution of the negative electrode active material is regulated to be within the above range, it is more conductive to improving the problem of roller sticking of the negative electrode plate during cold pressing, and is therefore more conductive to improving the cycling performance and storage performance of the secondary battery.

A type of the conductive agent is not particularly limited in the present application, as long as the objective of the present application can be achieved. Preferably, in some embodiments, the conductive agent includes at least one of acetylene black, superconducting carbon black, (Super-P), carbon nanotube, Ketjen black, graphene, and carbon nanofiber. The conductive agent in the above preferred range has good long-range conductivity, can reduce a use amount of the conductive agent, and enables a conductive network of the negative electrode plate to have good stability during cycles and expansion of the secondary battery meanwhile. Further, a complete conductive network can be formed in the negative electrode plate, thereby effectively reducing electron and ion diffusion impedance of the secondary battery, and enabling the secondary battery to have more outstanding kinetic performance.

A type of the dispersant is not particularly limited in the present application, as long as the objective of the present application can be achieved. Preferably, in some embodiments, the dispersant is sodium carboxymethyl cellulose, and the sodium carboxymethyl cellulose has a molecular weight from 5 W to 10 W and a degree of substitution from 0.55 to 0.95. When the sodium carboxymethyl cellulose with a molecular weight within the above preferred range is used, the formed negative electrode slurry can have a suitable viscosity, and has good fluidity. When sodium carboxymethyl cellulose with a degree of substitution within the above preferred range is used, the sodium carboxymethyl cellulose has better emulsification performance, so that the negative electrode active material can better infiltrate into the negative electrode slurry. The above "degree of substitution" is also called a degree of etherification, and is an average number of substitutions of H in 3 hydroxyl groups (-OH) on a molecular unit structure of cellulose with -CH₂COONa.

In some embodiments, a viscosity of the negative electrode slurry is from 4,000 mPa s to 12,000 mPa·s. When the viscosity of the negative electrode slurry is less than 4,000 mPa s, the negative electrode slurry has a too small viscosity, the negative electrode slurry is difficult to bind onto the negative electrode current collector, the resulting negative electrode film layer has poor weight consistency in different regions, and the coating process is greatly different; and when the viscosity of the negative electrode slurry is greater than 12,000 mPa s, the negative electrode slurry has a too large viscosity and poor fluidity, which is not conducive to forming a uniform negative electrode film layer, and will make the problem of roller sticking of the negative electrode plate sticky in the cold pressing process more serious. When the viscosity of the negative electrode slurry is regulated to be within the above range, it is more conductive to forming a uniform film layer, improving the problem of roller sticking of the negative electrode plate during cold pressing, and is more conductive to improving the cycling performance and storage performance of the secondary battery.

In some embodiments, a solid content of negative electrode slurry is from 40 wt% to 60 wt%. When the solid content is less than 40 wt%, there is too much deionized water in the negative electrode slurry, and the negative electrode slurry can be oven dried in a oven only at a higher temperature and a slow oven drying speed, so that the cold pressing process of the negative electrode plate not only tends to have roller sticking, but also needs to consume a lot of energy; and when the solid content is greater than 60 wt%, negative electrode active material particles are not uniformly dispersed, and when the negative electrode slurry is stirred, the negative electrode active material is not easily dispersed, and is easy to sediment due to agglomeration in the negative electrode slurry, thereby affecting the cycling performance and storage performance of the secondary battery. When the solid content of the negative electrode slurry is regulated to be within the above range, it is more conductive to improving the problem of roller sticking of the negative electrode plate during cold pressing, and is more conductive to improving the cycling performance and storage performance of the secondary battery.

The second aspect of the present application provides a method for preparing a negative electrode slurry, including steps of:
sufficiently mixing a negative electrode active material, a conductive agent, and a first part of a dispersant to obtain a uniform powder;
adding deionized water into the uniform powder, and stirring the mixture to obtain a first uniform slurry;
adding a second part of the dispersant and deionized water into the first uniform slurry, and stirring the mixture to obtain a second uniform slurry; and
adding a negative electrode binder into the second uniform slurry, stirring the mixture, regulating a viscosity of the mixture, and vacuum degassing to obtain the negative electrode slurry;
where the first part of the dispersant accounts for from 20% to 50% of a total mass of the dispersant, and the second part of the dispersant accounts for from 50% to 80% of the dispersant, where the negative electrode binder comprises a polymer composed of a building block represented by formula (I):

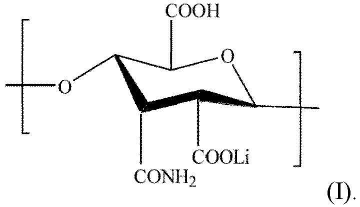

The first part of the dispersant is added to modify surface polarity of the negative electrode active material, so that the negative electrode active material and deionized water can achieve a better infiltration effect. The second part of the dispersant is added to uniformly disperse ingredients in the negative electrode slurry, so that the negative electrode slurry is more stable. The mass proportion of the first part of the dispersant and the mass proportion of the second part of the dispersant in the dispersant are regulated to be within the above range, thereby contributing more to the above effects of the dispersant. A content of the above deionized water is not particularly limited in the present application, as long as the objective of the present application can be achieved.

None of the "stirring" approach, speed, and time in the above steps is particularly limited in the present application, as long as the objective of the present application can be achieved.

The above "viscosity regulation" approach is not particularly limited in the present application, as long as the viscosity of the negative electrode slurry is regulated to be within a range from 4,000 mPa s to 12,000 mPa·s, and the objective of the present application can be achieved.

The above "vacuum degassing" approach and vacuum degree are not particularly limited in the present application, as long as the objective of the present application can be achieved. For example, the vacuum degree may be -50 KPa or higher.

The method for preparing a negative electrode slurry provided in the second aspect of the present application is characterized by simple operations, and easily available, safe and environmentally friendly raw materials, thereby reducing the harm to the environment and personnel, and is more suitable for large-scale application in the industry. Further, the negative electrode binder is used in the preparation method, which is more conductive to improving the problem of roller sticking of the negative electrode plate during cold pressing, and is more conductive to improving the cycling performance and storage performance of the secondary battery.

### [Negative electrode plate]

The third aspect of the present application provides a negative electrode plate, comprising a negative current collector and a negative electrode film layer arranged on at least one surface of the negative electrode current collector. As an example, the negative electrode current collector has two surfaces opposite in its own thickness direction, and the negative electrode film layer is arranged on either one or both of the two opposite surfaces of the negative electrode current collector. The negative electrode film layer is prepared from the negative electrode slurry in the first aspect of the present application or is prepared using the preparation method in the second aspect of the present application, and a coating weight of the negative electrode film layer is from 130 mg/1,540.25 mm² to 190 mg/1,540.25 mm². The coating weight of the negative electrode film layer is regulated to be within the above range, so that the negative electrode film layer has the negative electrode active material at a suitable content in a same area, thereby enabling the secondary battery to have good energy density. The above negative electrode film layer is prepared from the negative electrode slurry in the first aspect of the present application or is prepared using the preparation method in the second aspect of the present application, is more conductive to improving the problem of roller sticking of the negative electrode plate during cold pressing, and is more conductive to improving the cycling performance and storage performance of the secondary battery.

In some embodiments, a compacted density of the negative electrode film layer is from 1.50 g/cm³ to 1.60 g/cm³. When the compacted density of the negative electrode film layer is less than 1.50 g/cm³, gaps between negative electrode active material particles are too large, and contact between the negative electrode active material particles becomes poor, thereby affecting interface stability of the negative electrode film layer, and then affecting the cycling performance and storage performance of the secondary battery; and when the compacted density of the negative electrode film layer is greater than 1.60 g/cm³, the negative electrode active material particles have an increased risk of breakage, thereby affecting the interface stability of the negative electrode film layer, and then affecting the cycling performance and storage performance of the secondary battery. When the compacted density of the negative electrode film layer is regulated to be within the above range, it is more conductive to improving the cycling performance and storage performance of the secondary battery.

In some embodiments, a cohesion of the negative electrode plate is from 33.5 N/m to 80.1 N/m, showing that the negative electrode plate of the present application has good cohesion, stabilizes the structure of the negative electrode plate, improves the problem of roller sticking of the negative electrode plate during cold pressing, and further improves the cycling performance and storage performance of the secondary battery. The above "cohesion" refers to a force inside the negative electrode film layer, i.e., a force between the negative electrode active materials in the negative electrode film layer.

The thickness of the negative electrode plate and the thickness of the negative electrode film layer are not particularly limited in the present application, as long as the objective of the present application can be achieved. Preferably, in some embodiments, the thickness of the negative electrode plate is from 113.5.4 µm to 172.4 µm, and a single layer thickness of the negative electrode film layer is from 52.8 µm to 82.2 µm.

In some embodiments, the negative electrode current collector can be a metal foil or a composite current collector. For example, a copper foil can be used as the metal foil. The composite current collector may comprise a high molecular material substrate layer and a metal layer formed on at least one surface of a high molecular material substrate. The composite current collector may be formed by forming a metal material (such as copper, copper alloy, nickel, nickel alloy, titanium, titanium alloy, silver, and silver alloy) on the high molecular material substrate (such as a substrate of polypropylene (PP), polyethylene terephthalate (PET), polybutylene terephthalate (PBT), polystyrene (PS), or polyethylene (PE)).

In some embodiments, the negative electrode plate may be prepared by: coating the negative electrode slurry on the negative electrode current collector in any one of the above embodiments, oven drying, and cold pressing, to provide the negative electrode plate.

### [Positive electrode plate]

The positive electrode plate comprises a positive electrode current collector and a positive electrode film layer arranged on at least one surface of the positive electrode current collector.

As an example, the positive electrode current collector has two surfaces opposite in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector can comprise a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of the lithium-containing phosphate of olivine-structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium iron manganese phosphate, and a composite material of lithium manganese iron phosphate and carbon.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above ingredients, such as the positive electrode active material, the conductive agent, the binder, and any other ingredient, for preparing the positive electrode plate in a solvent (such as N-methylpyrrolidone) to form a positive electrode slurry; and coating the positive electrode slurry on the positive electrode current collector, oven drying, and cold pressing, to obtain the positive electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone, and ethylsulfonylethane.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator with a porous structure having good chemical stability and mechanical stability may be selected.

In some embodiments, the material of the separator may be at least one selected from glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be identical or different, which is not particularly limited.

### [Secondary battery, battery module, battery pack, and electrical apparatus]

The secondary battery, the battery module, the battery pack, and the electrical apparatus in the present application are described below with reference to the drawings as appropriate.

In an embodiment of the present application, a secondary battery is provided, comprising the negative electrode plate according to any one of the above embodiments. A secondary battery of the present application may refer to the secondary battery according to any one of the above embodiments.

In general, the secondary battery comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode, while allowing ions to pass through.

In some embodiments, the positive electrode plate, the negative electrode plate, and the separator can be made into an electrode assembly by a winding process or a stacking process.

In some embodiments, the secondary battery may comprise an outer package. The outer package can be used to encapsulate the above-mentioned electrode assembly and electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be a plastic, and examples of the plastic include polypropylene, polybutylene terephthalate and polybutylene succinate, etc.

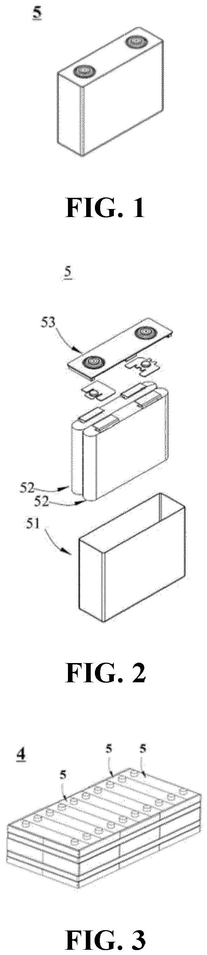

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may comprise a case 51 and a cover plate 53. Here, the case 51 can include a bottom plate and a side plate connected to the bottom plate, where the bottom plate and the side plate enclose to form an accommodating cavity. The case 51 has an opening that communicates with the accommodating cavity, and the cover plate 53 can cover the opening to close the accommodating cavity. The positive electrode plate, the negative electrode plate, and the separator may form an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art based on the application and capacity of the battery module.

Fig. 3 shows a battery module 4 as an example. Referring to Fig. 3, in the battery module 4, a plurality of secondary batteries 5 can be sequentially arranged along a length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the battery modules may be further assembled into a battery pack, the number of battery modules comprised in the battery pack may be one or more, and the specific number may be selected by those skilled in the art based on the application and capacity of the battery pack.

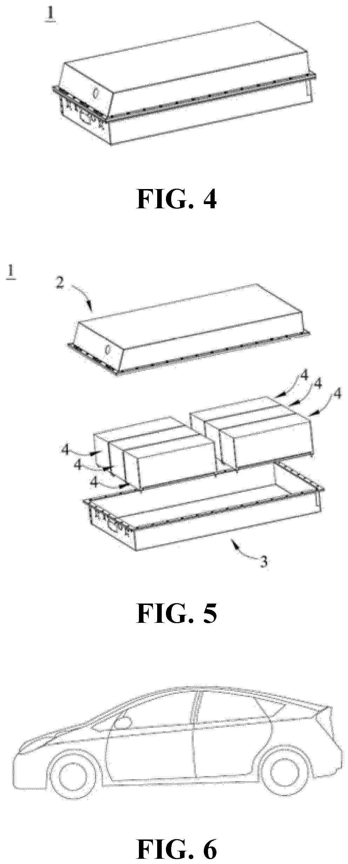

Fig. 4 and Fig. 5 are a battery pack 1 as an example. Referring to Fig. 4 and Fig. 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

For the electrical apparatus, the secondary battery, the battery module, or the battery pack may be selected according to its use requirements.

Fig. 6 is an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described below. The examples described below are illustrative, are merely used to explain the present application, and should not be construed as limitation on the present application. Where no specific techniques or conditions are specified in the examples, the techniques or conditions described in literatures of the art or the product specifications are prevailing. Where manufacturers are not specified, the reagents or instruments used are conventional products and are commercially available.

### Example 1-1

### <Preparation of a negative electrode slurry>

2,375 g of a negative electrode active material artificial graphite, 37.5 g of a conductive agent conductive carbon, and 5 g of a first part of a dispersant sodium carboxymethyl cellulose were added into a stirrer, for dry powder mixing and stirring at a revolving speed of 25 rpm and a rotation speed of 800 rpm for 15 min, to obtain a uniform powder;
1,283 g of deionized water was added into the above uniform powder, and the mixture was stirred at a revolving speed of 15 rpm for 60 min, to obtain a first uniform slurry;
20 g of a second part of the dispersant sodium carboxymethyl cellulose and 1,217 g of deionized water were added into the above first uniform slurry, and the mixture was stirred at a revolving speed of 25 rpm and a rotation speed of 1,800 rpm for 65 min, to obtain a second uniform slurry;
62.5 g of a negative electrode binder polymer A of the present application was added into the above second uniform slurry, and the mixture was stirred at a revolving speed of 25 rpm and a rotation speed of 1,200 rpm for 30 min, to obtain a sufficiently mixed slurry; where a molecular weight of the negative electrode binder was 70 W, and a percentage mass content of the negative electrode binder was 2.5% based on a total mass of the negative electrode slurry;
a small amount of deionized water was added into the slurry in the last step many times to regulate the viscosity, and the mixture was stirred at a revolving speed of 10 rpm and a rotation speed of 900 rpm for 20 min, to obtain a slurry with a viscosity of 8,000 mPa s; and
the stirrer was sealed, vacuum degassing was switched on until a vacuum degree within the stirrer reached -50 KPa, and the mixture was stirred at a revolving speed of 10 rpm and a rotation speed of 0 rpm for 20 min, to finally obtain a negative electrode slurry with a solid content of 50 wt%.

### <Preparation of a negative electrode plate>

The negative electrode slurry prepared above was uniformly coated on a surface of a copper foil with a thickness of 8 µm at a coating speed of 30 m/min and a coating mass of 160 mg/1,540.25 mm², oven dried at 98 °C, and cold pressed to obtain a double side-coated negative electrode plate with a single layer thickness of a negative electrode film layer of 67.0 µm. Then, a negative electrode plate of 76 mm×851 mm was obtained by, e.g., tab molding and slitting. A cold pressing pressure was 50 tons, a cold pressing speed was 40 m/min, and a compacted density of the negative electrode film layer was 1.55 g/cm³.

### <Preparation of a positive electrode plate>

A positive electrode active material LiNi_{0.6}Co_{0.2}Mn_{0.2}O₂, a conductive agent Super-P, and a binder polyvinylidene fluoride at a mass ratio of 96:2:2 were mixed, and then N-methylpyrrolidone (NMP) was added as a solvent. The mixture was stirred under the action of a vacuum mixer until the system was uniform, to obtain a positive electrode slurry with a solid content of 70 wt%. The positive electrode slurry was uniformly coated on a surface of an aluminum foil with a thickness of 13 µm, oven dried at 90 °C, and cold pressed to obtain a double side-coated positive electrode plate with a single layer thickness of a positive electrode film layer of 55 µm. Then, a positive electrode plate of 74 mm×867 mm was obtained by, e.g., tab molding and slitting.

### <Preparation of an electrolyte solution>

Ethylene carbonate, ethyl methyl carbonate, and diethyl carbonate were mixed at a volume ratio of 1:1:1 in an environment with a moisture content less than 10 ppm, to obtain a solvent of an electrolyte solution, and then LiPF₆ was dissolved in the mixed solvent to prepare an electrolyte solution with a lithium salt concentration of 1 mol/L.

### <Preparation of a separator>

A polyethylene film with a thickness of 14 µm was selected as the separator.

### <Preparation of a secondary battery>

The positive electrode plate, the separator, and the negative electrode plate were sequentially stacked, such that the separator was located between the positive electrode plate and the negative electrode plate to function for separation, and then winded to obtain an electrode assembly. The electrode assembly was placed in an outer package shell, and dried. Then, the electrolyte solution was injected, and a secondary battery was obtained by, e.g., vacuum encapsulation, standing, formation, and shaping.

### Example 1-2 to Example 1-6

These examples are same as Example 1-1 except that a number average molecular weight of the negative electrode binder was regulated as per Table 1, where the negative electrode binders with different number average molecular weights were provided by Zhejiang Casnovo Materials Co., Ltd.

### Example 2-1 to Example 2-5

These examples are same as Example 1-1 except that a percentage mass content of the negative electrode binder was regulated as per Table 2, where the percentage mass content of the negative electrode binder was regulated by increase or decrease of a mass of the negative electrode binder, and a mass of the negative electrode active material, a mass of the conductive agent, and a mass of the dispersant were same as those in Example 1-1.

### Example 3-1 to Example 3-2

These examples are same as Example 1-1 except that a viscosity of the slurry was regulated as per Table 3, where the viscosity of the slurry may be regulated by adding deionized water.

### Example 4-1 to Example 4-3

These examples are same as Example 1-1 except that a coating weight of the negative electrode film layer was regulated as per Table 4.

### Example 4-4 to Example 4-6

These examples are same as Example 1-1 except that the compacted density of the negative electrode film layer was regulated as per Table 4.

### Comparative Example 1

This example is same as Example 1-1 except that styrene butadiene rubber (SBR) was used as the negative electrode binder as per Table 1.

### Test of relevant parameters

### (1) Roller sticking performance test of the negative electrode material in a cold pressing process

A mass (g) of powder scraped off using a scraper from a surface of a cold roller was collected in the cold pressing process of the negative electrode plate in each example and the comparative example.

An amount of scraped powder is used to characterize the problem of roller sticking of the negative electrode plate during cold pressing. The more the amount of the scraped powder is, the more serious the problem of roller sticking of the negative electrode plate during cold pressing is.

### (2) Test of cohesion of the negative electrode plate (binding force between the negative electrode film layer and the negative electrode current collector)

Equipment model: tensile machine (model LXG2-LLCS-0009) of Zhongzhi Testing Machines Co., Ltd. A specific test process was as follows:
① A test sample with width×length=30 mm×150 mm was cut with a blade from a to-be-tested negative electrode plate, and was sticked on one end of a steel plate with double-sided adhesive tape (tape width×length=20 mm×150 mm).
② The test sample cut from the negative electrode plate in ① was sticked on the double-sided adhesive tape with a test side facing up. A low-adhesive green adhesive tape with a width of 20 mm and a length of 180 mm (model: MD-XTG-620-2335L) was sticked on the surface of the test side, and rolled with a roller three times in a same direction.
③ The above tensile machine was powered on, and the other end of the steel plate to which the negative electrode plate was not sticked was fixed with a lower clamp to ensure that the steel plate was placed perpendicularly to a base station, and ensure that the bottom of the steel plate was flush with a base. One end of the low-adhesive green adhesive tape was folded upward, and was fixed with an upper clamp.
④ First, the negative electrode plate was pre-stretched for about 5 mm, and then parameters of "force" and "displacement" were "reset" to zero. Then, the start button was clicked to start testing, values of the force and the displacement were read, and a ratio of the two was computed to obtain a value of the cohesion. Then, three parallel tests were made, to compute an average N1 as the cohesion.

### (3) Test of negative electrode plate resistance

The negative electrode plate in each example and the comparative example was tested with a battery internal resistance tester (model: BER1100) of Initial Energy Science&Technology Co., Ltd. The test process of the negative electrode plate resistance was that: a sample with an area of 4 cm×25 cm was cut along a longitudinal direction of the negative electrode plate, a compressed air valve was slowly switched on, and red and black test wire of the internal resistance tester was connected with test wire of an electrode plate resistance tester. The internal resistance tester and a pressure display were powered on, and connected to a computer. Dust-free paper was infiltrated with absolute ethanol to clean upper and lower Cu probes, and a reserving valve was pushed downward, so that the two Cu probes contacted with each other slowly. A black pressure regulating valve on a triplet was unscrewed to regulate the pressure to 0.4 t as indicated on a pressure indicator, test software of a film resistance meter was opened, and a current collector of the negative electrode plate was placed between the probes. First, a run button on the software was clicked, then the reserving valve was pushed downward, and a piece of data was automatically collected 15 sec later, and so on, until 20 points were tested. Then, a next group was tested, and finally the test results were averaged.

### (4) Cycling performance test

At 25 °C, the secondary battery prepared in each example and the comparative example was charged to 4.2V at a constant current of 1C, and then discharged to 2.5V at a constant current of 1C, which was a charging and discharging process. The discharge capacity at this time was denoted as an initial cycle discharge capacity C₁ of the secondary battery. After 400 cycles of the above charging and discharging process, the discharge capacity after the 400th cycle was denoted as a discharge capacity C₄₀₀ of the 400th cycle. Capacity retention rate (%) of the secondary battery after 400 cycles=C₄₀₀/C₁×100%.

### (5) Storage performance test

The secondary battery prepared in each example and the comparative example was fully charged to 4.2V at a constant current of 0.33C, charged at a constant voltage of 4.2V to a cut-off of 0.05C, and then discharged to 2.5V at a constant current of 0.33V. The discharge capacity at this time was denoted as C₀. Then, the secondary battery was fully charged to 4.2V at a constant current of 0.33C, charged at a constant voltage of 4.2V to a cut-off of 0.05C, then stored in a thermostat at 25 °C for 30 days, then taken out, discharged at 0.33C to 2.5V, then fully charged to 4.2V at a constant current of 0.33C, charged at a constant voltage of 4.2V to a cut-off of 0.05C, and then discharged to 2.5V at a constant current of 0.33V. The discharge capacity at this time was denoted as C₃₀, and the capacity retention rate (%) of the lithium-ion battery after storage for 30 days=C₃₀/C₀×100%.

The relevant parameter results and performance parameter results in the examples and the comparative example are as shown in Table 1 to Table 4 below.

**Table 1: Parameter Results and Performance Parameter Results in Example 1-1 to Example 1-6 and Comparative Example 1**

| No. | Negative electrode binder | | | Amount of scraped powder (g) | Cohesion of negative electrode plate (N/m) | Battery performance | |
|---|---|---|---|---|---|---|---|
| | Type | Percentage mass content (%) | Number average molecular weight | | | Cycling performance (%) | Storage performance (%) |
| Example 1-1 | Polymer A | 2.5 | 70 W | 0.74 | 70.4 | 98 | 98.9 |
| Example 1-2 | Polymer A | 2.5 | 90 W | 0.92 | 62.2 | 97.5 | 98.5 |
| Example 1-3 | Polymer A | 2.5 | 40 W | 1.21 | 50 | 96.5 | 97.9 |
| Example 1-4 | Polymer A | 2.5 | 120 W | 1.35 | 45.3 | 96.2 | 97.6 |
| Example 1-5 | Polymer A | 2.5 | 20 W | 2.21 | 33.2 | 93.7 | 94.7 |
| Example 1-6 | Polymer A | 2.5 | 140 W | 2.56 | 30.1 | 93.2 | 94.5 |
| Comparative Example 1 | SBR | 2.5 | \ | 3.57 | 15.8 | 91.6 | 93.1 |

| | | | | | | | |
|---|---|---|---|---|---|---|---|
| Note: "\" in Table 1 means that there is no corresponding parameter result. | | | | | | | |

**Table 2: Parameter Results and Performance Parameter Results in Example 1-1 and Example 2-1 to Example 2-5**

| No. | Negative electrode binder | | | Amount of scraped powder (g) | Negative electrode plate | | Battery performance | |
|---|---|---|---|---|---|---|---|---|
| | Type | Percentage mass content (%) | Number average molecular weight | | Cohesion (N/m) | Resistance (mΩ) | Cycling performance (%) | Storage performance (%) |
| Example 1-1 | Polymer A | 2.5 | 70 W | 0.74 | 70.4 | 20.4 | 98 | 98.9 |
| Example 2-1 | Polymer A | 1 | 70 W | 1.71 | 35.4 | 45.2 | 96.1 | 94.8 |
| Example 2-2 | Polymer A | 1.5 | 70 W | 0.93 | 56.1 | 34.7 | 97 | 95.6 |
| Example 2-3 | Polymer A | 3.5 | 70 W | 0.66 | 80.1 | 40.4 | 96.8 | 97.7 |
| Example 2-4 | Polymer A | 4 | 70 W | 0.61 | 82.7 | 50.3 | 93.5 | 95.3 |
| Example 2-5 | Polymer A | 0.3 | 70 W | 2.9 | 20.2 | 58.9 | 91.9 | 94.1 |

**Table 3: Parameter Results and Performance Parameter Results in Example 1-1 and Example 3-1 to Example 3-2**

| No. | Negative electrode binder | | | Viscosity of negative electrode slurry (mPa•s) | Amount of scraped powder (g) | Cohesion of negative electrode plate (N/m) | Battery performance | |
|---|---|---|---|---|---|---|---|---|
| | Type | Percentage mass content (%) | Number average molecular weight | | | | Cycling performance (%) | Storage performance (%) |
| Example 1-1 | Polymer A | 2.5 | 70 W | 8000 | 0.74 | 70.4 | 98 | 98.9 |
| Example 3-1 | Polymer A | 2.5 | 70 W | 4000 | 1.65 | 38.6 | 96.2 | 97.5 |
| Example 3-2 | Polymer A | 2.5 | 70 W | 12000 | 1.44 | 40.3 | 96.6 | 97.9 |

**Table 4: Parameter Results and Performance Parameter Results in Example 1-1 and Example 4-1 to Example 4-6**

| No. | Negative electrode binder | | | Viscosity of negative | Amount of scraped | Negative electrode plate | | | Battery performance | |
|---|---|---|---|---|---|---|---|---|---|---|
| | Type | Percentage | Number | | | Coating | Compacted | Cohesion | Cycling | Storage |
| | | mass content (%) | average molecular weight | electrode slurry (mPa• s) | powder (g) | mass (mg/1,5 40.25 mm²) | density (g/cm³) | (N/m) | perform ance (%) | perform ance (%) |
| Example 1-1 | Polymer A | 2.5 | 70 W | 8000 | 0.74 | 160 | 1.5 | 70.4 | 98 | 98.9 |
| Example 4-1 | Polymer A | 2.5 | 70 W | 8000 | 1.46 | 130 | 1.52 | 41.4 | 96.7 | 98.2 |
| Example 4-2 | Polymer A | 2.5 | 70 W | 8000 | 1.76 | 190 | 1.53 | 34.5 | 95.9 | 97.6 |
| Example 4-3 | Polymer A | 2.5 | 70 W | 8000 | 2.63 | 110 | 1.53 | 27.5 | 93.5 | 94.3 |
| Example 4-4 | Polymer A | 2.5 | 70 W | 8000 | 1.72 | 160 | 1.50 | 46.8 | 96.3 | 97.7 |
| Example 4-5 | Polymer A | 2.5 | 70 W | 8000 | 2.83 | 160 | 1.41 | 25.2 | 93.4 | 94.2 |
| Example 4-6 | Polymer A | 2.5 | 70 W | 8000 | 2.12 | 160 | 1.72 | 34.2 | 94.1 | 95.5 |

As can be seen from the above results, when the negative electrode binder of the present application is used for the negative electrode plates and secondary batteries in Example 1-1 to Example 1-6, the negative electrode plates in the examples have high cohesion and a small amount of scraped powder, and the secondary battery in each example has good cycling performance and storage performance. In contrast, in Comparative Example 1, when the negative electrode binder beyond the scope of the present application is used, the cycling performance and storage performance of the secondary battery are not effectively improved.

As can be seen from Example 1-1 to Example 1-6, when the number average molecular weight of the negative electrode binder is within the scope of the present application, the phenomenon of roller sticking of the negative electrode plate during cold pressing is improved, and the resulting secondary battery has better cycling performance and storage performance.

As can be seen from Example 1-1 and Example 2-1 to Example 2-5, when the percentage mass content of the negative electrode binder in the negative electrode slurry is within the scope of the present application, the phenomenon of roller sticking of the negative electrode plate during cold pressing is improved, and the resulting secondary battery has better cycling performance and storage performance. In Example 1-1, when the percentage mass content of the negative electrode binder is 2.5%, the secondary battery has best cycling performance and storage performance. In Example 2-3, when the percentage mass content of negative electrode binder is as high as 3.5%, the secondary battery also has good cycling performance and storage performance, but due to the high content of the negative electrode binder, excess negative electrode binder will move freely, thereby affecting infiltration of the electrolyte solution in the negative electrode film layer, and affecting the cycling performance and storage performance of the secondary battery.

As can be seen from Example 1-1 and Example 3-1 to Example 3-2, when the viscosity of the negative electrode binder is within the scope of the present application, the negative electrode plate and the secondary battery with good performance can be obtained, where the phenomenon of roller sticking of the negative electrode plate during cold pressing is improved, and the resulting secondary battery has better cycling performance and storage performance.

As can be seen from Example 1-1 and Example 4-1 to Example 4-6, when the coating weight and the compacted density of the negative electrode film layer are within the scope of the present application, the negative electrode plate and the secondary battery with good performance can be obtained, where the phenomenon of roller sticking of the negative electrode plate during cold pressing is improved, and the resulting secondary battery has better cycling performance and storage performance.

It should be noted that the present application is not limited to the above embodiments. The above embodiments are merely illustrative, and embodiments having substantively the same composition and having the same effects as the technical ideas within the scope of the technical solutions of the present application are all included in the technical scope of the present application. In addition, without departing from the scope of the subject matter of the present application, various modifications applied to the embodiments that can be conceived by those skilled in the art, and other modes constructed by combining some of the constituent elements of the embodiments are also included in the scope of the present application.

## Claims

1. A negative electrode slurry, comprising a negative electrode binder, the negative electrode binder comprising a polymer composed of a building block represented by formula (I):

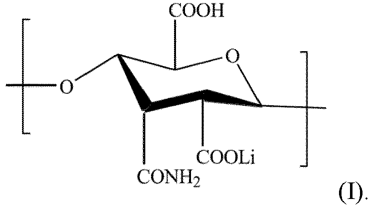

2. The negative electrode slurry according to claim 1, wherein a number average molecular weight of the negative electrode binder is from 40 W to 120 W, and is preferably from 70 W to 90 W.

3. The negative electrode slurry according to claim 1 or 2, wherein a percentage mass content of the negative electrode binder is from 1% to 3.5%, and is preferably from 2% to 3%, based on a total mass of the negative electrode slurry.

4. The negative electrode slurry according to any one of claims 1-3, wherein the negative electrode slurry comprises a negative electrode active material, a conductive agent, a dispersant, and the negative electrode binder, and a mass ratio of the negative electrode active material, the conductive agent, the dispersant, and the negative electrode binder is (93.0-97.0):(1.0-2.0):(1.0-1.5):(1.0-3.5), based on the total mass of the negative electrode slurry.

5. The negative electrode slurry according to any one of claims 1-4, wherein the negative electrode active material comprises at least one of graphite, soft carbon, hard carbon, carbon fiber, mesocarbon microbead, silicon-based material, tin-based material, and lithium titanate; and optionally,
the graphite includes at least one of artificial graphite and natural graphite; or
the silicon-based material includes at least one of elemental silicon, silicon-oxygen compound, silicon-carbon composite, and silicon alloy; or
the tin-based material includes at least one of elemental tin, tin-oxygen compound, and tin alloy.

6. The negative electrode slurry according to any one of claims 1-5, wherein a viscosity of the negative electrode slurry is from 4,000 mPa·s to 12,000 mPa·s.

7. A method for preparing a negative electrode slurry, comprising the steps of:
sufficiently mixing a negative electrode active material, a conductive agent, and a first part of a dispersant to obtain a uniform powder;
adding deionized water into the uniform powder, and stirring the mixture to obtain a first uniform slurry;
adding a second part of the dispersant and deionized water into the first uniform slurry, and stirring the mixture to obtain a second uniform slurry; and
adding a negative electrode binder into the second uniform slurry, stirring the mixture, regulating a viscosity of the mixture, and vacuum degassing to obtain the negative electrode slurry;
wherein the first part of the dispersant accounts for from 20% to 50% of a total mass of the dispersant, and the second part of the dispersant accounts for from 50% to 80% of the dispersant, wherein the negative electrode binder comprises a polymer composed of a building block represented by formula (I):

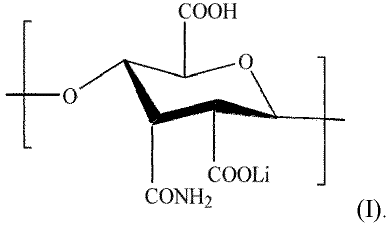

8. A negative electrode plate, comprising a negative electrode current collector and a negative electrode film layer provided on at least one surface of the negative electrode current collector, wherein the negative electrode film layer is prepared from the negative electrode slurry of any one of claims 1-6 or using the preparation method of claim 7, wherein a coating weight of the negative electrode film layer is from 130 mg/1,540.25 mm² to 190 mg/1,540.25 mm².

9. The negative electrode plate according to claim 8, wherein a compacted density of the negative electrode film layer is from 1.50 g/cm³ to 1.60 g/cm³.

10. A secondary battery, comprising the negative electrode plate of claim 8 or 9.

11. A battery module, comprising the secondary battery of claim 10.

12. A battery pack, comprising the battery module of claim 11.

13. An electrical apparatus, comprising at least one of the secondary battery of claim 10, the battery module of claim 11, or the battery pack of claim 12.
